(19) Europäisches Patentamt / European Patent Office / Office européen des brevets

(11) **EP 2 650 695 B1**

(12) **EUROPEAN PATENT SPECIFICATION**

(45) Date of publication and mention
of the grant of the patent:
**14.10.2015 Bulletin 2015/42**

(51) Int Cl.:
***G01S 13/90*** *(2006.01)*

(21) Application number: **13178923.2**

(22) Date of filing: **01.08.2013**

(54) **Imaging method for synthetic aperture radar in high squint mode**

Abbildungsverfahren für Radare mit synthetischer Apertur in starken Squint Modus

Procédé d'imagerie pour radar à synthèse d'ouverture en mode de strabisme élevée

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.08.2012 CN 201210273326**

(43) Date of publication of application:
**16.10.2013 Bulletin 2013/42**

(73) Proprietor: **Institute of Electronics, Chinese
Academy of
Sciences
Beijing 100190 (CN)**

(72) Inventors:
• **Deng, Yun-kai**
 **100190 Beijing (CN)**
• **Wang, Yu**
 **100190 Beijing (CN)**
• **Liu, Yue**
 **100190 Beijing (CN)**

(74) Representative: **Gulde & Partner
Patent- und Rechtsanwaltskanzlei mbB
Wallstraße 58/59
10179 Berlin (DE)**

(56) References cited:
 **DE-C1- 4 122 592     US-A- 5 608 404**

• **Y. KAI DENG ET AL: "Model and signal
processing of bistatic frequency-modulated
continuous wave synthetic aperture radar", IET
RADAR, SONAR & NAVIGATION, vol. 6, no. 6, 1
July 2012 (2012-07-01), pages 472-482,
XP055077692, ISSN: 1751-8784, DOI: 10.1049/iet-
rsn.2011.0276**
• **YUE LIU ET AL: "Focus Squint FMCW SAR Data
Using Inverse Chirp-Z Transform Based on an
Analytical Point Target Reference Spectrum",
IEEE GEOSCIENCE AND REMOTE SENSING
LETTERS, IEEE SERVICE CENTER, NEW YORK,
NY, US, vol. 9, no. 5, 29 May 2012 (2012-05-29),
pages 866-870, XP011458169, ISSN: 1545-598X,
DOI: 10.1109/LGRS.2012.2184833**
• **RICCARDO LANARI: "A New Method for the
Compensation of the SAR Range Cell Migration
Based on the Chirp Z-Transform", IEEE
TRANSACTIONS ON GEOSCIENCE AND
REMOTE SENSING, vol. 33, no. 5, 1 September
1995 (1995-09-01), pages 1296-1299,
XP055077650, ISSN: 0196-2892**
• **YI LIANG ET AL: "An approach to forward looking
FMCW radar imaging based on two-dimensional
Chirp-Z transform", SCIENCE CHINA
INFORMATION SCIENCES, vol. 53, no. 8, 9 July
2010 (2010-07-09), pages 1653-1665,
XP055077694, ISSN: 1674-733X, DOI:
10.1007/s11432-010-4035-4**
• **Y. WANG ET AL: "A novel non-interpolation polar
format algorithm using non-lineal flight
trajectories and auto-adaptive prf technique",
PROGRESS IN ELECTROMAGNETICS
RESEARCH, vol. 122, 17 November 2001
(2001-11-17), pages 155-173, XP055077699, DOI:
10.2528/PIER11092801**

**(Cont. next page)**

- **HUAPING XU ET AL: "NONUNIFORM SAMPLING PFA FOR SQUINT SPOTLIGHT SAR IMAGING", GEOSCIENCE AND REMOTE SENSING SYMPOSIUM (IGARSS), 2011, 29 July 2011 (2011-07-29), pages 332-335, XP055077702,**

**Description**

**TECHNICAL FIELD**

The present disclosure belongs to the field of microwave remote sensing and observation of the earth, and relates to a Chirp-Z transform-based precise focusing method in a high squint mode, which applies to the field of high squint earth observation of airborne or spaceborne Synthetic Aperture Radars (SAR).

**BACKGROUND**

Currently, SAR technique is an important technical measure for remote sensing, imaging and monitoring of the earth, which realizes, all-time, all-weather and large-area coverage high-resolution imaging, and it is widely applied in aspects including disaster monitoring, tactical reconnaissance, terrain matching navigation and target recognition etc. SAR images are representations of the electromagnetic scattering characteristic of scene echo data after signal processing. Traditional Chirp-Z transform imaging method rectifies the dependence of first-order range-azimuth coupling on target slant ranges in the two-dimensional frequency domain through scaled Fourier transform. Traditional Chirp-Z transform can realize focusing of SAR echo signals while avoiding an interpolation operation. However, due to the characteristic that quadratic and higher azimuth-range coupling terms change with slant ranges is neglected, and thus traditional Chirp-Z transform can only be applied in a side-looking or slightly squinted-looking mode.

"Model and signal processing of bistatic frequency-modulated continuous wave synthetic aperture radar" (Y Liu et al., IET Radar, Sonar & Navigation, vol. 6, no. 6, 1 July 2012, p. 472 - 482) discloses a Bistatic frequency-modulated continuous wave (FMCW) synthetic aperture radar (SAR) mounting the radar transmitter and receiver on separate platforms, which offers considerable capabilities, reliability and flexibility in designing FMCW SAR missions. Moreover, the spatial separation achieves better isolation between transmission and reception channels compared with the monostatic FMCW SAR where the two separate dedicated antennas are fixed on one platform. In this study, a bistatic FMCW SAR signal model is proposed to formulate the bistatic slant range history in bistatic FMCW configuration. Based on the preceding model, an approach is presented to deal with the double-square-root (DSR) term, and thus an accurate FMCW bistatic point target reference spectrum (BPTRS) is derived. Besides accurately addressing the signal characteristics of bistatic FMCW SAR, the proposed spectrum also significantly simplifies the signal processing of bistatic FMCW SAR, which will really push the applications of bistatic FMCW SAR in remote sensing fields. Furthermore, based on the proposed BPTRS, an extended inverse chirp-z transform (EICZT) algorithm is proposed to process the bistatic FMCW SAR data by introducing a perturbation function to deal with the range-variance of second- and third-order range-azimuth coupling terms. Two simulation experiments are carried out to verify the accuracy of this novel formulation and highlight the performance of the proposed focusing approach.

"Focus Squint FMCW SAR Data Using Inverse Chirp-Z Transform Based on an Analytical Point Target Reference Spectrum" (Y Liu et al., IEEE Geoscience and Remote Sensing Letters, vol. 9, no. 5, 29 May 2012, p. 866-870) discloses frequency-modulated continuous-wave (FMCW) synthetic aperture radar (SAR) systems offering smaller size and lower cost compared with pulsed-mode systems. They are therefore widely used for Earth observation where frequent revisits at low costs or small sizes are desirable. By accurately formulating the instantaneous slant range during the transmitting and receiving operations, an analytical point target reference spectrum has been developed for the FMCW SAR system, where an additional range-azimuth coupling term is found. Based on previous work, this letter presents a modified inverse chirp-z transform (ICZT) algorithm to deal with the range-azimuth coupling term, which appears to be a scaling factor in range. The new scaling factor is formulated in this letter for the first time. An ICZT is well suited for FMCW SAR since it can handle a dechirped signal without interpolations, thus reducing the computing load. Simulation experiment and real data processing result validate the proposed focusing algorithm.

"A new method for the compensation of the SAR range cell migration based on the chirp z-transform" (R. Lanari, IEEE Transactions on Geoscience and Remote Sensing, Vol. 33, no. 5, 1 September 1995, p. 1296-1299) describes a new method that permits the compensation of the RDRCM effect using a nonstandard Fourier transform (FT). This operation is applied, in the two-dimensional Fourier domain, to the range signal spectrum and allows the compensation of the azimuth frequency-dependent scaling factor due to the RDRCM. The nonstandard FT is performed via a chirp z-transform that is carried out with one convolution operation and two phase multiplications.

DE4122592C1 discloses a method for correcting range migration in image generation in synthetic aperture radar (SAR) to eliminate the entire range migration or the residual range migration left by a conventional focussing method. In the method, prior to the range compression the data are transformed to the range-Doppler domain and there multiplied by a specific two-dimensional phase function; after an additional range Fourier transformatioin the range compression is then carried out with a specifically modified range transfer function and thereafter a range inverse Fourier transformation performed. Furthermore, a corresponding residual phase error is corrected. In addition, the data can if necessary be segmented in range or a range precompression performed. With the method according to the invention the range migration is completely eliminated without having to perform an explicit interpolation. Furthermore, with reduced processing expenditure improved image quality is obtained and moreover all known SAR focussing methods can be equipped with the method according to the invention.

US5608404A discloses a linear-FM SAR imaging radar method and apparatus to produce a real-time image by first arranging the returned signals into a plurality of subaperture arrays, the columns of each subaperture array having samples of dechirped baseband pulses, and further including a processing of each subaperture array to obtain coarse-resolution in azimuth, then fine-resolution in range, and lastly, to combine the processed subapertures to obtain the final fine-resolution in azimuth. Greater efficiency is achieved because both the transmitted signal and a local oscillator signal mixed with the returned signal can be varied on a pulse-to-pulse basis as a function of radar motion. Moreover, a novel circuit can adjust the sampling location and the A/D sample rate of the combined dechirped baseband signal which greatly reduces processing time and hardware. The processing steps include implementing a window function, stabilizing either a central reference point and/or all other points of a subaperture with respect to doppler frequency and/or range as a function of radar motion, sorting and compressing the signals using a standard fourier transforms. The stabilization of each processing part is accomplished with vector multiplication using waveforms generated as a function of radar motion wherein these waveforms may be synthesized in integrated circuits. Stabilization of range migration as a function of doppler frequency by simple vector multiplication is a particularly useful feature of the invention; as is stabilization of azimuth migration by correcting for spatially varying phase errors prior to the application of an autofocus process.

"An approach to forward looking FMCW radar imaging based on two-dimensional Chirp-Z transform" (Y Liang et al., Sciece China - Information Sciences, vol. 53, no. 8, 9 July 2010, p. 1653-1665) studies the configuration (airborne forward looking radar imaging with frequency modulated continuous wave (FMCW) technology) with one central antenna element for signal transmitting and other antenna elements for signal receiving. According to its imaging geometry, the analytical expression of the received signal for forward looking imaging radar based on FMCW is given. By performing the equivalent phase center principle, the received signal is equalized to the case of system configuration with antenna both for transmitting and receiving signals. The Doppler frequency shift effect, induced by the platform's continuous motion while radar transmits and receives signals, is analyzed in detail and the approximate compensation method is shown. Based on this, a novel method for forward looking FMCW radar imaging is developed, which adopts two-dimensional Chirp-Z transform to implement scaling operation. Also the complete derivation process of the algorithm and the expression of each compensation factor are presented. The whole algorithm only includes FFT and complex multiplication, with interpolation free, and is easy to implement in reality. Simulation results verify the correctness of the analysis and the validity of the proposed algorithm.

"A novel non-interpolation polar format algorithm using non-lineal flight trajectories and auto-adaptive prf technique" (Y Wang et al., Progress In Electromagnetics Research, Vol. 122, 17 November 2011, p. 155-173) proposes a novel non-interpolation PFA algorithm for sensor flying along non-lineal flight trajectories, which are specially designed curves in conical surface to decrease the numerous computation load resulted by the classical interpolation-based Polar Format Algorithm (PFA) for spotlight synthetic aperture radar (SAR). Then an innovative auto-adaptive Pulse Repetition Frequency (PRF) technique is put forward to uniformly sample signal in azimuth direction. The computation load of the new PFA is merely left to azimuth chirp z-transforms (CZTs) and range fast Fourier transforms (FFTs) after dechirp processing and residual video phase (RVP) compensation. Two flight modes (ellipse trajectory mode and hyperbola trajectory mode) are analyzed. A lineal approximation method is proposed to simplify non-lineal sensor trajectory analysis. Computer simulation results for multiple point targets validate the presented approach. Comparison of computation load between this PFA and traditional PFA is represented therein.

"Non-uniform sampling PFA for squint spotlight SAR imaging" (H. Xu et al., Geoscience and Remote Sensing Symposium (IGARSS), 29 July 2011, p. 332-335) improved polar format algorithm (PFA) based on nonuniform azimuth sampling for squint spotlight synthetic aperture radar (SAR) imaging. The range resampling for chirped signal is carried out by chirp z transform (CZT). The novel nonuniform azimuth sampling during the echo data collection enables the utilizing of CZT in azimuth resampling. According to the data collection geometry, the precise expression of phase error induced by wavefront curvature is deduced, and then the overlapped subaperture approach (OSA) is adopted to correct the geometric distortion and defocus arising from the effect of wavefront curvature. Simulation results confirm the validity of the presented approach.

## SUMMARY

### (1) Technical problem

To solve the problem of the prior art, the purpose of the present disclosure is to extend the application of Chirp-Z transform to a precise SAR imaging method in a high squint mode by utilizing the advantages of Chirp-Z transform without increasing the operational complexity.

(2) Technical solution

To realize the purpose above, the present disclosure provides an imaging method for an SAR in a high squint mode. The imaging step of the technical solution of the method to solve the technical problem includes:

Step 1: perform azimuth Fourier transform for high squint SAR echo original data to obtain echo signals in azimuth Doppler domain-range time domain;

Step 2: utilize a high squint SAR echo signal time domain model, a spectrum model and a time domain and frequency domain mapping relation to multiply the echo signals in the azimuth Doppler domain-range time domain by a perturbation function to eliminate the dependence of an echo signal quadratic azimuth-range coupling factor on change of a target slant range and obtain an echo signal having a first-order range-azimuth coupling relation with the target slant range, the range cell migration of the echo signal is expressed by a brand new range migration factor;

Step 3: perform range Fourier transform for the obtained echo signal having the first-order range-azimuth coupling relation with the target slant range to obtain a two-dimensional spectrum which is an echo signal having the first-order range-azimuth coupling relation with the target slant range;

Step 4: multiply the two-dimensional spectrum by a reference function; the reference function is a conjugate function of a point target echo spectrum at a reference slant range; therefore, the two-dimensional spectrum is multiplied by the reference function to compensate all phases, which do not vary with the range, of the two-dimensional spectrum to obtain a signal differential range migration spectrum;

Step 5: construct a range migration expansion factor according to characteristics of signal differential range migration spectrum, rectify the differential range migration factor of the echo signal in the two-dimensional frequency domain by utilizing Chirp-Z transform, and completing range migration rectification by performing convolution once and phase multiplication twice to obtain a range-compressed signal;

Step 6: perform phase multiplication for the range-compressed signal through the azimuth to compensate an azimuth residual phase, perform azimuth compression for the range-compressed signal and obtain an azimuth-compressed signal;

Step 7: perform azimuth inverse Fourier transform for the azimuth-compressed signal to obtain a focused SAR image.

(3) Beneficial effect

The method of the present disclosure eliminates changes of quadratic azimuth-range coupling terms with target slant ranges by introducing a perturbation function, so as to extend the application of Chirp-Z transform to high squint data processing. The present disclosure breaks though the limit of traditional Chirp-Z transform algorithm and realizes highly-efficient and precise focusing of an airborne or spaceborne high squint SAR echo signal. The range cell migration is expressed by a migration factor and rectified by Chirp-Z transform. The operation only needs to perform convolution once and phase multiplication twice without any interpolation operation, the result is precise and the operational efficiency is relatively high. After the operation, the signal enters the range-Doppler domain to provide conditions for azimuth residual phase compensation in the next step.

BRIEF DESCRIPTION OF THE DRAWINGS

Fig. 1 illustrates a geometric relationship between a radar platform and a ground target in a high squint mode;

Fig. 2a is a flowchart of a high squint SAR imaging method based on Chirp-Z transform;

Fig. 2b is a schematic diagram of Chirp-Z transform;

Fig. 3 is a diagram illustrating a simulated lattice target scene;

Fig. 4 shows an imaging result (PT1 contour line) of a traditional Chirp-Z transform imaging method; and

Fig. 5 shows an imaging result (PT1 contour line) of a Chirp-Z transform-based high squint SAR imaging method provided by the present disclosure.

## DETAILED DESCRIPTION

To make the purpose, technical solution and advantages of the present disclosure clearer, the present disclosure will be further described in details below in combination with specific embodiments and with reference to the accompanying drawings.

An imaging method of an SAR in a high squint mode of the present disclosure may be implemented by means of hardware, and may also be implemented by means of software. For example, the imaging method of an SAR in a high squint mode may be installed and executed in the form of software on a personal computer, an industrial control computer or a server, or the method of the present disclosure may be also made into an embedded chip and embodied in the form of software. The specific embodiments of the present disclosure will be described below with reference to the accompanying drawings.

According to an SAR echo signal time domain model, a spectrum model and a time domain and frequency domain mapping relation, a perturbation function is introduced in the azimuth Doppler domain-range time domain or Doppler-time domain to eliminate the dependence of a quadratic azimuth-range coupling factor on change of a target slant range. Subsequently, a brand new range migration factor is formed, and a differential range migration factor of an echo signal is rectified in the two-dimensional frequency domain by Chirp-Z transform. Finally, precise focusing of a high squint SAR signal can be realized by reference function multiplication and azimuth residual phase compensation.

The specific operations include: perform azimuth Fourier transform for an original signal, transform the signal to the range time-azimuth Doppler domain or time-Doppler domain, multiply the original signal by a perturbation function in the azimuth Doppler domain or time-Doppler domain to eliminate change of an azimuth-range quadratic coupling term with a target slant range, output an echo signal only having a first-order range-azimuth coupling relation with the target slant range; subsequently, perform range Fourier transform for the original signal and transform the original signal to the two-dimensional frequency domain, multiply an echo signal having a first-order range-azimuth coupling relation with the target slant range by a reference function in the two-dimensional frequency domain to compensate all terms which do not vary with the range to complete consistent compression; subsequently, perform Chirp-Z transform for signals compressed consistently to rectify a range migration factor and change the signals having completed the range migration rectification to the range-Doppler domain; complete residual phase compensation of the azimuth in the range-Doppler domain to eliminate a residual phase of the azimuth; finally, perform azimuth inverse Fourier transform to obtain a well-focused high-resolution SAR earth remote sensing image.

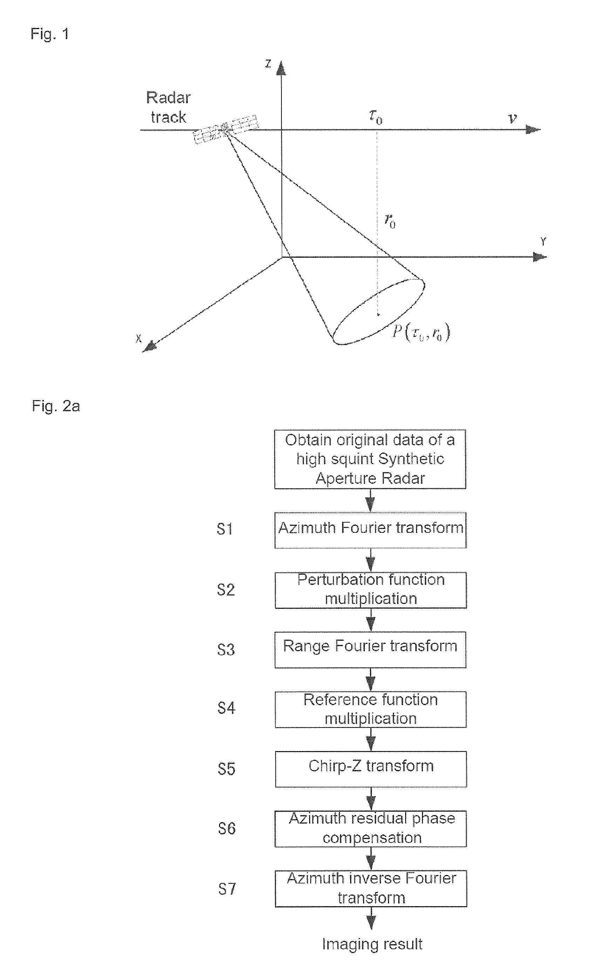

Fig. 1 illustrates a geometric relationship between a radar platform and a ground target in a high squint mode, wherein Y axis direction is the radar navigation direction, i.e. the azimuth, X axis is vertical to the radar navigation direction on the ground, i.e. the range, and Z axis is the radar height. v is the speed of the radar platform along the Y axis direction.

In the present disclosure, the mathematical symbols involved are defined as follows:

$t$: range time variable
$\tau$: azimuth time variable
$f$: range frequency parameter
$f_\tau$: azimuth frequency parameter
$f_0$: transmission signal carrier frequency
$\sigma(\tau_0, r_0)$: backscattering coefficient of ground target $P(\tau_0, r_0)$
$\tau_0$: zero Doppler time of ground target $P(\tau_0, r_0)$
$r_0$: shortest slant range from ground target $P(_0, r_0)$ to radar platform route
$K_r$: transmission signal frequency modulation rate
$C$: signal transmission speed

In the embodiment, the SAR transmission signal is a linear frequency modulation signal and the mathematical expression of the linear frequency modulation signal $s(t)$ is:

$$s(t) = \exp\left(j\pi K_r t^2\right) \qquad (1)$$

where j is an imaginary unit.

According to a slant range relation between a radar antenna and a ground target, as shown in Fig. 1, at $(\tau, t)$,

the echo signal delay $g(\tau,t,\tau_0,r_0)$ of the ground target $P(\tau_0,r_0)$, can be expressed as follows:

$$g\left(\tau,t,\tau_0,r_0\right)=\sigma\left(\tau_0,r_0\right)\exp\left[j2\pi f_0\left(t-\frac{2\sqrt{r_0^2+\left(\tau-\tau_0\right)^2 v^2}}{c}\right)\right]s\left(t-\frac{2\sqrt{r_0^2+\left(\tau-\tau_0\right)^2 v^2}}{c}\right) \tag{2}$$

The two-dimensional spectrum $G(f_\tau,f,\tau_0,r_0)$ of the echo signal can be expressed as follows:

$$G\left(f_\tau,f,\tau_0,r_0\right)=\sigma\left(\tau_0,r_0\right)\exp\left[j\Phi\left(f_\tau,f,\tau_0,r_0\right)\right] \tag{3}$$

where $\Phi(f_\tau,f,\tau_0,r_0)$ is the spectrum phase, i.e.

$$\Phi\left(f_\tau,f,\tau_0,r_0\right)=-\frac{4\pi r_0}{c}\sqrt{\left(f_0+f\right)^2-\left(\frac{cf_\tau}{2v}\right)^2}-\frac{\pi f^2}{K_r}-2\pi f_\tau\tau_0 \tag{4}$$

Fig. 2a shows that high squint SAR imaging processing based on Chirp-Z transform of the present disclosure is implemented through the following steps:

Step 1: perform azimuth Fourier transform for high squint SAR original echo data to transform the original echo data into echo signals in the azimuth Doppler domain-range time domain;

Step 2: utilize a high squint SAR echo signal time domain model, a spectrum model and a time domain and frequency domain mapping relation to multiply the echo signals in the azimuth Doppler domain-range time domain by a perturbation function to eliminate the dependence of an echo signal quadratic azimuth-range coupling factor on change of a target slant range (SAR data is divided into the azimuth and the range, and a hyphen "-" is generally used to represent two directions of the data according to documents in the field of SARs), obtain an echo signal having a first-order range-azimuth coupling relation with the target slant range, the range cell migration of the echo signal is expressed by a brand new range migration factor;

the signal obtained in the above step is multiplied by the perturbation function in the time-Doppler domain, and the perturbation function $H_p(f_\tau,t)$ changes with the azimuth frequency and the range time variable. The perturbation function is expressed as the sum of two terms of a quadratic function and a cubic function related to the range time variable, and the expression of the perturbation function is:

$$H_p\left(f_\tau,t\right)=\exp\left\{j\left[\pi\gamma\left(t-\tau_{dref}\right)^2-2\pi\xi\left(t-\tau_{dref}\right)^3\right]\right\} \tag{5}$$

The imaging method needs to select a reference point in an imaging scene and the centre of the scene is generally selected. The quadratic term $\gamma$ and the cubic term coefficient $\xi$ of the perturbation function are expressed as follows:

$$\gamma=\frac{c\Phi_2 K_{mref}}{3r_{ref}\Phi_1\Phi_3-c\Phi_2} \tag{6}$$

$$\xi=r_{ref}\Phi_2\Phi_3 K_{mref}^2\left(\frac{2K_{mref}-1}{3r_{ref}\Phi_1\Phi_3-c\Phi_2}\right) \tag{7}$$

In the formulae, $r_{ref}$ is the shortest slant range from the reference point to the radar track, $\tau_{ref}$ is the Doppler delay of the reference point, $\Phi_1$, $\Phi_2$ and $\Phi_3$ represent the first-order, second-order and third-order range-azimuth coupling factors of the signal, respectively, $K_{mref}$ is the equivalent frequency modulation rate of the original echo signal in the time-Doppler domain, $r_{dref}$ represents the slant range of the target in the time-Doppler domain. To simplify the expression, the Doppler factor D is defined as follows:

$$D = \sqrt{1 - \left(\frac{cf_\tau}{2vf_0}\right)^2} \qquad (8)$$

Then,

$$\Phi_1 = \frac{1}{D} \ , \quad \Phi_2 = -\frac{1-D^2}{2f_0 D^3} \ , \quad \Phi_3 = \frac{1-D^2}{2f_0^2 D^5} \qquad (9)$$

$$K_{mref} = \frac{K_r}{1 + \dfrac{4\Phi_2\left(f_\tau\right)r_{ref}K_r}{c}} \qquad (10)$$

After multiplying by the perturbation function, output an echo signal only having a first-order range-azimuth coupling relation with the target slant range, and the signal still exists in the time-Doppler domain.

Step 3: perform range Fourier transform for the echo signal only having the first-order range-azimuth dependency with the target slant range, wherein the signal is outputted in Step 2, obtain a two-dimensional spectrum which is an echo signal having the first-order range-azimuth coupling relation with the target slant range; transform the echo signal from the time-Doppler domain to the two-dimensional frequency domain, and the echo signal can be expressed as follows:

$$G_1\left(f_\tau, f\right) = \sigma\left(\tau_0, r_0\right)\exp\left[j\Phi_1\left(f_\tau, f\right)\right] \qquad (11)$$

where

$$\Phi_1\left(f_\tau, f\right) = A_1 + A_2 \Delta\tau f + A_3 + 2\pi f_\tau \tau_0 \qquad (12)$$

$$A_1 = -2\pi f \tau_{dref} - \pi \cdot \frac{f^2}{K_{mref} + \gamma} - \left(\frac{4\pi r_{ref}}{c}\Phi_3 \cdot K_{mref}^3 + 2\pi\xi\right)\cdot\left(\frac{1}{K_{mref}+\gamma}\right)^3 \cdot f^3 \qquad (13)$$

$$A_2 = -\frac{K_{mref}}{\pi D\left(K_{mref}+\gamma\right)} \qquad (14)$$

$$A_3 = \frac{\pi K_{mref}\gamma}{K_{mref}+\xi}\left[\frac{\pi K_s \gamma^2 \Delta\tau^2}{\left(K_{mref}+\xi\right)^2} + \left(\frac{4\pi r_{0ref}}{c}\Phi_3\gamma^3 - 2\pi\xi\right)\left(\frac{1}{K_{mref}+\xi}\right)^3 K_{mref}^3 \Delta\tau^3\right] \qquad (15)$$

$$\Delta\tau = \frac{r - r_{dref}}{cD} \qquad (16)$$

where $A_1$ represents the spectrum phase term independent of the target slant range, i.e. the term which does not vary with the range, $A_2$ represents the Doppler shift of the signal, $A_3$ represents the azimuth residual phase, $r_{0ref}$ represents the slant range of the reference point target in the time-Doppler domain and $K_s$ represents the linear component of the signal frequency modulation rate.

Step 4: multiply the two-dimensional spectrum by a reference function, the reference function is a conjugate function of a point target echo spectrum at a reference slant range. Therefore, the two-dimensional spectrum is multiplied by the reference function to compensate all phases, which do not vary with the range, of the two-dimensional spectrum to obtain a signal differential range migration spectrum; perform reference function multiplication for the echo signal $G_1(f_\tau,f)$ in the two-dimensional frequency domain to compensate all terms which do not vary with the range. The expression of the reference function $H_R(f_\tau,f)$ is as follows:

$$H_R\left(f_\tau,f\right) = \exp\left\{j\left(2\pi\tau_{dref}f + \frac{\pi}{K_{mref}+\gamma}f^2 + \left(\frac{4\pi r_{ref}}{c}\Phi_3 \cdot K_{mref}^3 + 2\pi\xi\right)\cdot\left(\frac{1}{K_{mref}+\gamma}\right)^3 \cdot f^3\right)\right\} \qquad (17)$$

After the reference function multiplication, the form of the outputted differential range migration signal is:

$$G_2(f_\tau,f) = \sigma(\tau_0, r_0)\exp\left[j(A_2\Delta\tau f + A_3 + 2\pi f_\tau \tau_0)\right] \qquad (18)$$

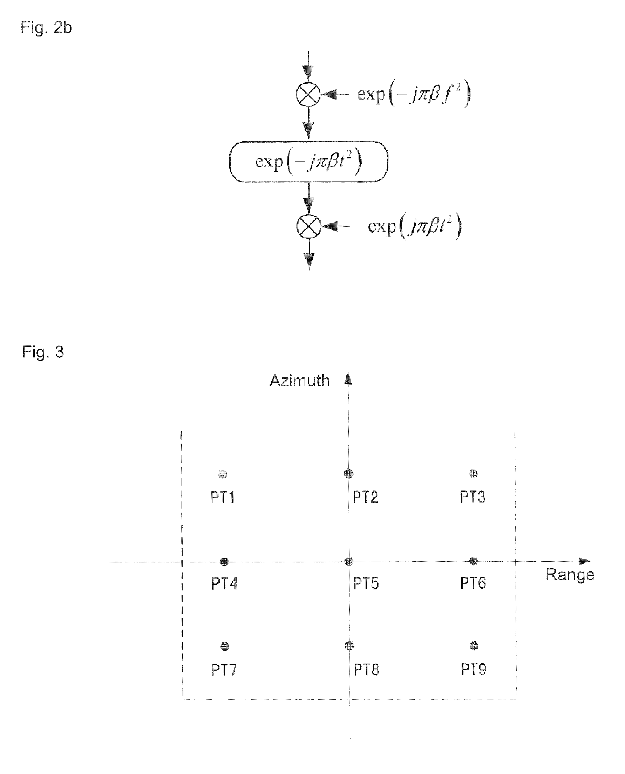

Step 5: construct a range migration expansion factor according to characteristics of the signal differential range migration spectrum, for a differential range migration signal $G_2(f_\tau,f)$, rectify the range cell migration of the echo signal by utilizing Chirp-Z transform, and complete range migration rectification through performing convolution operation once and phase multiplication twice, and obtain a range-compressed signal. As shown in Fig. 2b, three steps are included specifically, first, multiply $G_2(f_\tau,f)$ by $\exp(-j\pi\beta f^2)$ in the frequency domain; subsequently, perform convolution for the signal outputted after the multiplication in the frequency domain with $\exp(-j\pi\beta t^2)$ ; finally, multiply the convoluted signal by $\exp(-j\pi\beta t^2)$. Chirp-Z transform avoids an interpolation operation, and the signal enters the range-Doppler domain after the operations to provide conditions for azimuth residual phase compensation in the next step.

The phase multiplication and convolution functions are functions of the range migration factor, and the range migration factor $\beta$ is expressed as follows:

$$\beta = -\frac{K_{mref}}{2\pi D^2\left(K_{mref}+\gamma\right)} \qquad (19)$$

Step 6: perform phase multiplication for the range-compressed signal through the azimuth to compensate an azimuth residual phase, perform azimuth compression for the range-compressed signal and obtain an azimuth-compressed signal; complete azimuth residual phase compensation of the azimuth in the range-Doppler domain. The operation is completed through multiplication of an azimuth residual phase compensation function, and the residual phase compensation function $H_A(f_\tau,r_0)$ is expressed as:

$$H_A\left(f_\tau,r_0\right) = \frac{\pi K_{mref}\gamma}{K_{mref}+\xi}\left[\frac{\pi K_s\gamma^2\Delta\tau^2}{\left(K_{mref}+\xi\right)^2} + \left(\frac{4\pi r_{ref}}{c}\Phi_3\gamma^3 - 2\pi\xi\right)\left(\frac{1}{K_{mref}+\xi}\right)^3 K_{mref}^3\Delta\tau^3\right] \qquad (20)$$

Step 7: perform azimuth Fourier transform for the azimuth-compressed signal to obtain a high squint focused SAR image.

Eliminating the dependence of the echo signal quadratic azimuth-range coupling factor on the change of the slant range is completed by means of the perturbation function multiplication. The perturbation function is expressed as the sum of two terms. The two terms refer to the quadratic function and the cubic function related to the range time variable. The eliminating operation refers to eliminating the dependence of the range-azimuth quadratic coupling term on the target slant range, such that the range-azimuth quadratic coupling term of the signal does not change with the range in the two-dimensional frequency domain.

Multiplying the two-dimensional spectrum by the reference function in Step 4 refers to completing the compensation of all phases which do not vary with the range in one step to eliminate the constant range-azimuth first coupling term, quadratic coupling term and cubic coupling term. Because the range dependence of the range-azimuth quadratic coupling term has been eliminated, the range dependence of the cubic coupling term is neglected and therefore the signals having completed the perturbation function multiplication are transformed to the two-dimensional frequency domain, and then multiplied by the reference function to compensate all quantities which do not vary with the range in one step, i.e. the range-azimuth first coupling term, quadratic coupling term and cubic coupling term are eliminated.

The range cell migration is expressed as a migration factor, and rectified by Chirp-Z transform, and the operation only needs to perform convolution once and phase multiplication twice. After the rectification operation is completed, the signals enter the range-Doppler domain to provide conditions for the azimuth residual phase compensation in the next step.

An example of Chirp-Z transform-based SAR imaging in a high squint mode will be illustrated below: major parameters of a simulated high squint SAR system are listed in Table 1. The simulating scene involves 9 point targets PT1 to PT9 distributed in different azimuths and range positions. As shown in Fig. 3, the interval of each point target is 500m and all backscattering coefficients are set as 1.

Table 1: simulation system parameters

| Platform speed | 150 m/s |
|---|---|
| Azimuth antenna length | 1m |
| Flight altitude | 10000m |
| Squint angle | 40° |
| Antenna downward angle of visibility | 45° |
| Carrier frequency | 10 GHz |
| Pulse repetition frequency | 500 Hz |
| Measurement bandwidth | 3000 m |
| Range bandwidth | 300 MHz |

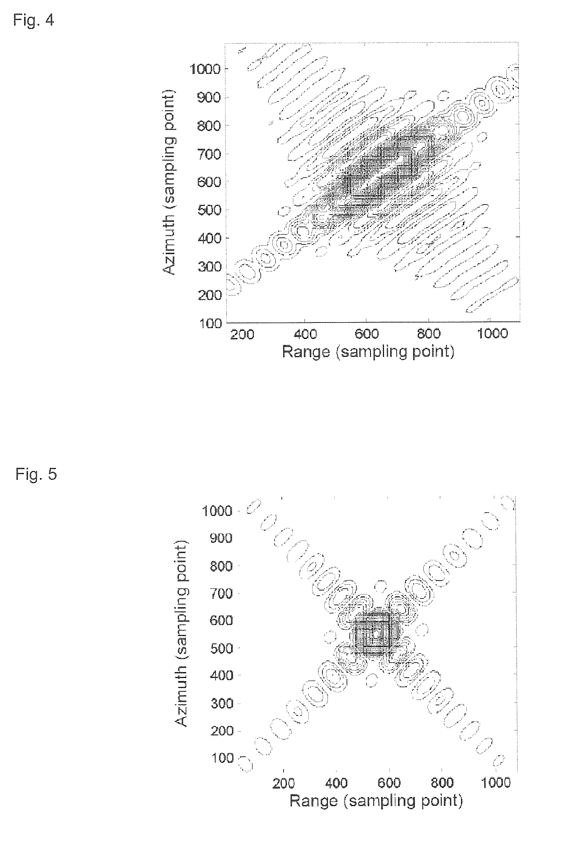

In order to compare the result of the imaging method disclosed in the present disclosure and that of the traditional Chirp-Z imaging method, the parameters in Table 1 are designed to be a group of reasonable high squint mode SAR system parameters, and can be improved according to actual requirements. For the high squint SAR system, the range migration of the remote point PT1 is more obvious with the worst imaging effect. Therefore, a contour line of the imaging effect of the target PT1 is drawn. Fig. 4 shows an imaging result of the traditional Chirp-Z method, and Fig. 5 shows a processing result according to the method provided in the present disclosure. By comparing the two figures, it can be seen that the point target image focused by the traditional Chirp-Z method is evidently defocused and the main lobes of the azimuth and the range are obviously widened. More than 300 sampling points are occupied in the azimuth in particular, and there is obvious widening. There is also obvious side lobe elevation of the obtained point target in the azimuth and range. Nevertheless, through the point target imaging result obtained by the method provided in the present disclosure, the main lobe widths of the azimuth and the range are controlled, wherein the azimuth main lobe occupies about 200 sampling points while the side lobe is well inhibited, and the image is clear. The embodiment proves that the Chirp-Z transform-based high squint imaging method of the present disclosure can realize precise high-resolution imaging of a SAR in a high squint mode, and is improved dramatically compared with the traditional Chirp-Z algorithm.

**Claims**

1. An imaging method for a Synthetic Aperture Radar (SAR) in a high squint mode, wherein imaging step comprises:

Step 1 (S1): performing azimuth Fourier transform for high squint SAR echo original data to obtain echo signals in azimuth Doppler domain-range time domain;

Step 2 (S2): utilizing a high squint SAR echo signal time domain model, a spectrum model and a time domain and frequency domain mapping relation to multiply the echo signals in the azimuth Doppler domain-range time domain by a perturbation function to eliminate the dependence of an echo signal quadratic azimuth-range coupling factor on change of a target slant range, and obtain an echo signal having a first-order range-azimuth coupling relation with the target slant range, the range cell migration of the echo signal is expressed by a brand new range migration factor;

Step 3 (S3): performing range Fourier transform for the obtained echo signal having the first-order range-azimuth coupling relation with the target slant range to obtain a two-dimensional spectrum which is an echo signal having the first-order range-azimuth coupling relation with the target slant range;

Step 4 (S4): multiplying the two-dimensional spectrum by a reference function; the reference function is a conjugate function of a point target echo spectrum at a reference slant range; therefore, the two-dimensional spectrum is multiplied by the reference function to compensate all phases, which do not vary with the range, of the two-dimensional spectrum to obtain a signal differential range migration spectrum;

Step 5 (S5): constructing a range migration expansion factor according to characteristics of signal differential range migration spectrum, rectifying a differential range migration factor of the echo signal in the two-dimensional frequency domain by utilizing Chirp-Z transform, and completing range migration rectification by performing convolution once and phase multiplication twice to obtain a range-compressed signal;

Step 6 (S6): performing phase multiplication for the range-compressed signal through the azimuth to compensate an azimuth residual phase, performing azimuth compression for the range-compressed signal and obtaining an azimuth-compressed signal;

Step 7 (S7): performing azimuth inverse Fourier transform for the azimuth-compressed signal to obtain a focused SAR image.

2.  The imaging method for an SAR in a high squint mode according to claim 1, wherein eliminating the dependence of the echo signal quadratic azimuth-range coupling factor on the change of the slant range is completed by means of the perturbation function multiplication, the perturbation function is expressed as the sum of two terms, and the two terms are the quadratic function and the cubic function related to the range time variable respectively, the eliminating operation refers to eliminating the dependence of the range-azimuth quadratic coupling term on the target slant range, such that the range-azimuth quadratic coupling term of the signal does not change with the range in the two-dimensional frequency domain.

3.  The imaging method for an SAR in a high squint mode according to claim 1, wherein multiplying the two-dimensional spectrum by the reference function in Step 4 refers to completing the compensation of all phases which do not vary with the range in one step to eliminate the constant range-azimuth first coupling term, quadratic coupling term and cubic coupling term; because the range dependence of the range-azimuth quadratic coupling term has been eliminated, the range dependence of the cubic coupling term is neglected and therefore the signals having completed the perturbation function multiplication are transformed to the two-dimensional frequency domain, and then multiplied by the reference function to compensate all quantities which do not vary with the range in one step, i.e. the range-azimuth first coupling term, quadratic coupling term and cubic coupling term are eliminated.

4.  The imaging method for an SAR in a high squint mode according to claim 1, wherein the range cell migration is expressed as a migration factor, and rectified by Chirp-Z transform, and the operation only needs to perform convolution once and phase multiplication twice, and after the rectification operation is completed, the signals enter the range-Doppler domain to provide conditions for the azimuth residual phase compensation in the next step.

**Patentansprüche**

1.  Abbildungsverfahren für einen Radar mit synthetischer Apertur (SAR) in einem starken Squint Modus, wobei der Abbildungsschritt aufweist:

Schritt 1 (S1): Durchführen einer Azimut-Fourier-Transformation für ursprüngliche High-Squint-SAR-Echodaten, um Echosignale in einem Azimut-Doppler-Bereich-Range-Zeitbereich zu gewinnen;

Schritt 2 (S2): Verwenden eines High-Squint-SAR-Echosignal-Zeitbereichmodells, eines Spektrummodells und einer Abbildungsrelation zwischen Zeitbereich und Frequenzbereich, um die Echosignale im Azimut-Doppler-Bereich-Range-Zeitbereich mit einer Störfunktion zu multiplizieren, um die Abhängigkeit eines quadratischen Azimut-Range-Kopplungsfaktors eines Echosignals von einer Änderung einer Zielschrägentfernung zu eliminieren und ein Echosignal zu gewinnen, das eine Range-Azimut-Kopplungsrelation erster Ordnung mit der Zielschrägentfernung aufweist, wobei die Range-Zellen-Migration des Echosignals durch einen vollkommen neuen Range-Migrationsfaktor ausgedrückt wird;

Schritt 3 (S3): Durchführen einer Range-Fourier-Transformation für das gewonnene Echosignal, das die Range-Azimut-Kopplungsrelation erster Ordnung mit der Zielschrägentfernung aufweist, um ein zweidimensionales Spektrum zu gewinnen, das ein Echosignal, das die Range-Azimut-Kopplungsrelation erster Ordnung mit der Zielschrägentfernung aufweist, ist;

Schritt 4 (S4): Multiplizieren des zweidimensionalen Spektrums mit einer Referenzfunktion; wobei die Referenzfunktion eine konjugierte Funktion eines Echospektrums eines Punktziels bei einer Referenzschrägentfernung ist; daher wird das zweidimensionale Spektrum mit der Referenzfunktion multipliziert, um alle sich nicht mit dem Range verändernden Phasen des zweidimensionalen Spektrums auszugleichen, um ein differentielles Range-Migrationsspektrum eines Signals zu gewinnen;

Schritt 5 (S5): Konstruieren eines Range-Migrations-Erweiterungsfaktors gemäß Eigenschaften eines differentiellen Range-Migrationsspektrums eines Signals, Korrigierten eines differentiellen Range-Migrationsfaktors des Echosignals im zweidimensionalen Frequenzbereich durch Verwendung einer Chirp-z-Transformation, und Vollenden der Range-Migrations-Korrektur durch Durchführen von einmal einer Faltung und zweimal einer Phasenmultiplikation, um ein Range-komprimiertes Signal zu gewinnen;

Schritt 6 (S6): Durchführen einer Phasenmultiplikation für das Range-komprimierte Signal durch das Azimut, um eine Azimut-Restphase auszugleichen, Durchführen einer Azimut-Kompression für das Range-komprimierte Signal und Gewinnen eines Azimut-komprimierten Signals;

Schritt 7 (S7): Durchführen einer inversen Azimut-Fourier-Transformation für das Azimut-komprimierte Signal, um ein fokussiertes SAR-Bild zu gewinnen.

2. Abbildungsverfahren für einen SAR in einem starken Squint-Modus nach Anspruch 1, wobei das Eliminieren der Abhängigkeit des quadratischen Azimut-Range-Kopplungsfaktors eines Echosignals von der Änderung der Schrägentfernung mittels der Störfunktionsmultiplikation vollendet wird, wobei die Störfunktion als die Summe zweier Terme ausgedrückt wird und die zwei Terme jeweils die quadratische Funktion und die kubische Funktion relativ zur Range-Zeit-Variablen sind, wobei sich die Eliminierungsoperation auf das Eliminieren der Abhängigkeit des quadratischen Range-Azimut-Kopplungsterms von der Zielschrägentfernung bezieht, derart, dass sich der quadratische Range-Azimut-Kopplungsterm des Signals nicht mit dem Range im zweidimensionalen Frequenzbereich ändert.

3. Abbildungsverfahren für einen SAR in einem starken Squint-Modus nach Anspruch 1, wobei sich das Multiplizieren des zweidimensionalen Spektrums mit der Referenzfunktion in Schritt 4 auf das Vollenden des Ausgleichs aller sich nicht mit dem Range verändernden Phasen in einem Schritt bezieht, um den konstanten ersten Range-Azimut-Kopplungsterm, quadratischen Kopplungsterm und kubischen Kopplungsterm zu eliminieren; da die Range-Abhängigkeit des quadratischen Range-Azimut-Kopplungsterms eliminiert wurde, wird die Range-Abhängigkeit des kubischen Kopplungsterms vernachlässigt, so dass die Signale, die die Störfunktionsmultiplikation vollendet haben, in den zweidimensionalen Frequenzbereich transformiert werden und dann mit der Referenzfunktion multipliziert werden, um alle Größen, die sich nicht mit dem Range verändern, in einem Schritt auszugleichen, d. h., der erste Range-Azimut-Kopplungsterm, quadratische Kopplungsterm und kubische Kopplungsterm werden eliminiert.

4. Abbildungsverfahren für einen SAR in einem starken Squint-Modus nach Anspruch 1, wobei die Range-Zellen-Migration als ein Migrationsfaktor ausgedrückt wird und durch eine Chirp-z-Transformation korrigiert wird und die Operation die Faltung nur einmal und die Phasenmultiplikation zweimal durchführen muss und nach Vollenden der Korrekturoperation die Signale in den Range-Doppler-Bereich gelangen, um Bedingungen für den Ausgleich der Azimut-Restphase im nächsten Schritt bereitzustellen.

## Revendications

1. Procédé d'imagerie pour un radar à synthèse d'ouverture (SAR) dans un mode de strabisme élevé, dans lequel l'étape d'imagerie comprend :

    étape 1 (S1) : l'exécution d'une transformée de Fourier d'azimut pour des données d'origine d'écho de SAR à strabisme élevé pour obtenir des signaux d'écho dans un domaine de temps de portée de domaine Doppler d'azimut ;

    étape 2 (S2) : l'utilisation d'un modèle de domaine de temps de signal d'écho de SAR à strabisme élevé, d'un modèle de spectre et d'une relation de mappage entre un domaine de temps et un domaine de fréquence pour multiplier les signaux d'écho dans le domaine de temps de portée de domaine Doppler d'azimut par une fonction de perturbation pour éliminer la dépendance d'un facteur de couplage d'azimut et de portée quadratique de signal d'écho à un changement d'une portée d'inclinaison de cible, et obtenir un signal d'écho ayant une relation de couplage d'azimut et de portée de premier ordre avec la portée d'inclinaison cible, la migration de cellule de portée du signal d'écho est exprimée par un tout nouveau facteur de migration de portée ;

étape 3 (S3) : l'exécution d'une transformée de Fourier de portée pour le signal d'écho obtenu ayant la relation de couplage d'azimut et de portée de premier ordre avec la portée d'inclinaison cible pour obtenir un spectre bidimensionnel qui est un signal d'écho ayant la relation de couplage d'azimut et de portée de premier ordre avec la portée d'inclinaison cible ;

étape 4 (S4) : la multiplication du spectre bidimensionnel par une fonction de référence ; la fonction de référence est une fonction conjuguée d'un spectre d'écho cible de point à une portée d'inclinaison de référence ; par conséquent, le spectre bidimensionnel est multiplié par la fonction de référence pour compenser toutes les phases, qui ne varient pas avec la portée, du spectre bidimensionnel afin d'obtenir un spectre de migration de portée différentielle de signal ;

étape 5 (S5) : la construction d'un facteur d'expansion de migration de portée en fonction de caractéristiques du spectre de migration de portée différentielle de signal, la rectification d'un facteur de migration de portée différentielle du signal d'écho dans le domaine de fréquence bidimensionnel par l'utilisation d'une transformée Chirp-Z et l'exécution d'une rectification de migration de portée en effectuant une convolution une fois et une multiplication de phase deux fois pour obtenir un signal de portée compressée ;

étape 6 (S6) : l'exécution d'une multiplication de phase pour le signal de portée compressée à travers l'azimut pour compenser une phase résiduelle d'azimut, l'exécution d'une compression d'azimut pour le signal de portée compressée et l'obtention d'un signal d'azimut compressé ;

étape 7 (S7) : l'exécution d'une transformée de Fourier inverse d'azimut pour le signal d'azimut compressé pour obtenir une image de SAR focalisée.

2. Procédé d'imagerie pour un SAR dans un mode à strabisme élevé selon la revendication 1, dans lequel l'élimination de la dépendance du facteur de couplage d'azimut et de portée quadratique de signal d'écho au changement de la portée d'inclinaison est effectuée au moyen de la multiplication de fonction de perturbation, la fonction de perturbation est exprimée en tant que la somme de deux termes, et les deux termes sont la fonction quadratique et la fonction cubique respectivement liées à la variable de temps de portée, l'opération d'élimination porte sur l'élimination de la dépendance du terme de couplage quadratique de portée et d'azimut à la portée d'inclinaison cible, de sorte que le terme de couplage quadratique de portée et d'azimut du signal ne change pas avec la portée dans le domaine de fréquence bidimensionnel.

3. Procédé d'imagerie pour un SAR dans un mode à strabisme élevé selon la revendication 1, dans lequel la multiplication du spectre bidimensionnel par la fonction de références à l'étape 4 porte sur l'exécution de la compensation de toutes les phases qui ne varient pas avec la portée à une étape pour éliminer le premier terme de couplage de portée et d'azimut constant, le terme de couplage quadratique et le terme de couplage cubique ; puisque la dépendance du terme de couplage quadratique de portée et d'azimut à la portée a été éliminée, la dépendance du terme de couplage cubique à la portée est négligée et les signaux ayant effectué la multiplication de fonction de perturbation sont donc transformés dans le domaine de fréquence bidimensionnel, puis multipliés par la fonction de référence pour compenser toutes les quantités qui ne varient pas avec la portée à une étape, c'est-à-dire que le premier terme de couplage de portée et d'azimut, le terme de couplage quadratique et le terme de couplage cubique sont éliminés.

4. Procédé d'imagerie pour un SAR dans un mode à strabisme élevé selon la revendication 1, dans lequel la migration de cellule de portée est exprimée en tant que facteur de migration, et rectifiée par une transformée Chirp-Z, et l'opération doit uniquement effectuer une convolution une fois et une multiplication de phase deux fois et, après la fin de l'opération de rectification, les signaux entrent dans le domaine Doppler de portée pour fournir des conditions pour la compensation de phase résiduelle d'azimut à l'étape suivante.

Fig. 1

Fig. 2a

Obtain original data of a
high squint Synthetic
Aperture Radar

S1    Azimuth Fourier transform

S2    Perturbation function
multiplication

S3    Range Fourier transform

S4    Reference function
multiplication

S5    Chirp-Z transform

S6    Azimuth residual phase
compensation

S7    Azimuth inverse Fourier
transform

Imaging result

Fig. 2b

$$\exp\left(-j\pi\beta f^2\right)$$

$$\exp\left(-j\pi\beta t^2\right)$$

$$\exp\left(j\pi\beta t^2\right)$$

Fig. 3

Azimuth

PT1    PT2    PT3

PT4    PT5    PT6    Range

PT7    PT8    PT9

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 4122592 C1

- US 5608404 A

### Non-patent literature cited in the description

- **Y LIU et al.** Model and signal processing of bistatic frequency-modulated continuous wave synthetic aperture radar. *IET Radar, Sonar & Navigation,* 01 July 2012, vol. 6 (6), 472-482
- **Y LIU et al.** Focus Squint FMCW SAR Data Using Inverse Chirp-Z Transform Based on an Analytical Point Target Reference Spectrum. *IEEE Geoscience and Remote Sensing Letters,* 29 May 2012, vol. 9 (5), 866-870
- **R. LANARI.** A new method for the compensation of the SAR range cell migration based on the chirp z-transform. *IEEE Transactions on Geoscience and Remote Sensing,* 01 September 1995, vol. 33 (5), 1296-1299

- **Y LIANG et al.** An approach to forward looking FMCW radar imaging based on two-dimensional Chirp-Z transform. *Sciece China - Information Sciences,* 09 July 2010, vol. 53 (8), 1653-1665
- **Y WANG et al.** A novel non-interpolation polar format algorithm using non-lineal flight trajectories and auto-adaptive prf technique. *Progress In Electromagnetics Research,* 17 November 2011, vol. 122, 155-173
- **H. XU et al.** Non-uniform sampling PFA for squint spotlight SAR imaging. *Geoscience and Remote Sensing Symposium,* 29 July 2011, 332-335